# EUROPÄISCHE PATENTSCHRIFT

(11) **EP 2 542 558 B1**
(45) Veröffentlichungstag und Bekanntmachung des Hinweises auf die Patenterteilung: **17.06.2015**
(21) Anmeldenummer: 11707119.1
(22) Anmeldetag: 18.02.2011
(51) Int. Cl.: C07F 7/12

(54) **VERFAHREN ZUR UMWANDLUNG VON DISILANEN**
PROCESS FOR CONVERSION OF DISILANES
PROCÉDÉ DE TRANSFORMATION DE DISILANES

(30) Priorität: 04.03.2010 DE 102010002577
(43) Veröffentlichungstag der Anmeldung: 09.01.2013
(73) Patentinhaber: Wacker Chemie AG, 81737 München (DE)
(72) Erfinder: TAMME, Gudrun, 01468 Moritzburg OT Boxdorf (DE); GEISSLER, Werner, 01561 Thiendorf OT Lötzschen (DE); MAUTNER, Konrad, 84489 Burghausen (DE)
(74) Vertreter: Fritz, Helmut
(86) Internationale Anmeldenummer: PCT/EP2011/052440
(87) Internationale Veröffentlichungsnummer: WO 2011/107360

(56) Entgegenhaltungen:
- EP-A1- 0 635 510

## Beschreibung

Die Erfindung betrifft die katalysierte Abspaltung von Alkylgruppen aus Chlor- und Alkylgruppen aufweisenden Disilanen mit Chlorwasserstoff.

Die hochsiedende Fraktion aus der Reaktion von Methylchlorid und Silicium mit einem Siedepunkt über 70°C (Hochsieder) enthält die sogenannten "spaltbaren Disilane" Dimethyltetrachlordisilan und Trimethyltrichlordisilan, die nach bekannten Verfahren auf einfache Art aminkatalysiert mit Halogenwasserstoff zu Monosilanen gespalten werden können. Die anderen Disilane mit vier, fünf und sechs Methylgruppen sind auf diese Art nicht verwertbar und werden deshalb auch als "nichtspaltbare Disilane" bezeichnet. Eine Vielzahl Patente beschäftigt sich mit der Umwandlung der Hochsieder in monomere Alkylchlorsilane. Alle beschriebenen Verfahren sind sehr aufwändig und mit hohen apparativen Schwierigkeiten verbunden. Zum Beispiel wird in EP 635510 A die Spaltung der Hochsieder mit Halogenwasserstoff und einem aluminiumchloridhaltigem Katalysator bei Temperaturen über 250°C in Monosilane beschrieben.

H. Sakurei et. al. (Aluminium chloride-catalyzed reactions of organosilicon compounds II, tetrahydron letters no. 45, pp. 5493-5497, 1966, pergamon press ltd.) beschreiben die diskontinuierliche Umwandlung von Disilanen in Flüssigphase zum Teil unter Zusatz von Acetylchlorid.

Gegenstand der Erfindung ist ein Verfahren zur Herstellung von Disilanen der allgemeinen Formel (1)

RₐSi₂Cl₆₋ₐ (1),

bei dem Gemische enthaltend die Disilane der allgemeinen Formel (2)

R_{b}Si₂Cl_{6-b} (2),

wobei
- **R**: einen Alkylrest mit 1 bis 6 Kohlenstoffatomen,
- **a**: die Werte 1, 2 oder 3
- **b**: die Werte 4, 5 oder 6
bedeuten,
mit Chlorwasserstoff in Gegenwart eines Aluminiumoxidkatalysators umgesetzt werden, der auf 100 Gewichtsteile Aluminiumoxid 1 bis 10 Gewichtsteile Aluminiumchlorid und 0 bis 10 Gewichtsteile eines Metalloxids enthält, das ausgewählt wird aus Magnesiumoxid, Kupferoxid, Zinkoxid und deren Gemischen.

Das Verfahren erlaubt die Verwertung von alkylreichen Disilanen, z.B. Hexamethyldisilan, Pentamethylchlordisilan und Tetramethyldichlordisilan einfach, störungsarm und kontinuierlich zu gestalten.

Im Verfahren werden die Alkylgruppen lewissauer katalysiert mittels Chlorwasserstoff abgespalten, sodass die sogenannten spaltbaren Disilane entstehen und in den Kreislauf der Aminspaltung eingespeist werden können. Da diese Reaktion exotherm verläuft, wird an den Reaktor nur die Bedingung gestellt, die Wärmeabfuhr zu gewährleisten.

Bevorzugt weist der Rest R 1 bis 6 Kohlenstoffatome auf. Insbesondere ist der Rest R ein Methyl- oder Ethylrest. Die Silane (2) können in beliebigen Verhältnissen zueinander vorliegen. Ebenso können Sie in Gemischen mit anderen, die Umwandlung nicht störenden, verdampfbaren Substanzen vorliegen.

Bevorzugte Produkte sind Dialkyltetrachlordisilan und Trialkyltrichlordisilan.

Das Aluminiumoxid kann alpha- oder bevorzugt gamma-Aluminiumoxid sein. Der Aluminiumoxidkatalysator kann als Pulver oder bevorzugt als Formkörper eingesetzt werden.

Vorzugsweise weist der Aluminiumoxidkatalysator auf 100 Gewichtseile Aluminiumoxid mindestens 1, insbesondere mindestens 3 und höchstens 10, insbesondere höchstens 6 Gewichtseile Aluminiumchlorid auf. Der Aluminiumoxidkatalysator kann auf 100 Gewichtseile Aluminiumoxid bis 5 Gewichtsteile, insbesondere bis 2 Gewichtsteile eines Metalloxids aufweisen. Es können als Metalloxide oder Mischoxide alle beliebigen Oxide oder Mischoxide der Metalle Magnesium, Kupfer und Zink eingesetzt werden. Besonders bevorzugt ist Magnesiumoxid.

Vorzugsweise besitzt der Aluminiumoxidkatalysator eine BET-Oberfläche von mindestens 100 m²/g, besonders bevorzugt mindestens 230 m²/g und vorzugsweise höchstens 600 m²/g. Vorzugsweise besitzt der Aluminiumoxidkatalysator ein Porenvolumen von mindestens 0,2 cm³/g, besonders bevorzugt mindestens 0,5 cm³/g und vorzugsweise höchstens 1,5 cm³/g.

Vorzugsweise wird als Aluminiumoxidkatalysator ein Aluminiumoxid-Metalloxid Trägermaterial eingesetzt, das mit Aluminiumchlorid beschichtet ist. Die Aluminiumchloridbeschichtung kann in-situ durch Aktivierung des Al₂O₃ mit Chlorwasserstoff erzeugt werden.

Das Verfahren wird im Chlorwasserstoffüberschuß durchgeführt, bevorzugt maximal mit dem der doppelten Chlorwasserstoffmenge, die stöchiometrisch errechnet wird.

Das Verfahren wird bevorzugt bei mindestens 150°C, besonders bevorzugt mindestens 180°C, insbesondere mindestens 200°C und vorzugsweise höchstens 370°C, besonders bevorzugt höchstens 350°C, ganz besonders bevorzugt höchstens 280°C, insbesondere höchstens 240 °C durchgeführt. Das Verfahren wird bevorzugt bei mindestens 1 bar, besonders bevorzugt mindestens 2 bar, insbesondere mindestens 4 bar und vorzugsweise höchstens 30 bar, besonders bevorzugt höchstens 15 bar, insbesondere höchstens 10 bar durchgeführt.

Das Verfahren kann diskontinuierlich oder vorzugsweise kontinuierlich durchgeführt werden.

Als Reaktoren für das Verfahren sind alle temperierbaren Apparate, die leichtes Handling mit dem festen Katalysator erlauben, geeignet. Besonders bevorzugt werden Rohrreaktoren mit Wärmeträgerkreislauf eingesetzt, die eine günstige Temperaturführung erlauben.

Alle vorstehenden Symbole der vorstehenden Formeln weisen ihre Bedeutungen jeweils unabhängig voneinander auf. In allen Formeln ist das Siliziumatom vierwertig.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 6,5 bar (abs.) und einer Temperatur von 300°C durchgeführt.

Für die Beispielumsetzungen wurde ein wärmeträgerbeheizter Rohrreaktor der Nennweite 50 und einem Liter Katalysatorstrangformlinge aus gamma- Aluminiumoxid mit ca. 5 Gew.-% Aluminiumchlorid einer BET-Oberfläche von 200m²/g und einem Porenvolumen von 0,5 cm³/g eingesetzt.

In Beispiel 3 enthielt der Katalysator zusätzlich 0,8 Gew.-% Mg in Form von Oxid.

Die verwertende Silanfraktion mit einem Siedebereich von 70-160°C enthält einen schwankenden Anteil an umzusetzenden Komponenten und Nebenprodukten wie z.B. verschiedene Alkyl (C2 und grösser)-Methyl-Chlorsilane, Chlormethylsiloxane und Kohlenwasserstoffe.

### Beispiel 1:

Eine disilanhaltige Fraktion mit 70 % einer Mischung aus Tetramethyldichlordisilan, Pentamethylchlordisilan und Hexamethyldisilan sowie 30 % Nebenkomponenten erreicht bei einem Durchsatz von 0,9 Mol/h abzuspaltender Methylgruppen(ca. 170g/h) mit dem 1,6fachen Chlorwasserstoffüberschuss bei 220°C Reaktormanteltemperatur und 5,5 bar Überdruck einen Disilanumsatz von 96% zu Dimethyltetrachlordisilan und Trimethyltrichlordisilan.

### Beispiel 2:

Eine disilanhaltige Fraktion mit 55 % einer Mischung aus Tetramethyldichlordisilan, Pentamethylchlordisilan und Hexamethyldisilan sowie mit 45 % Nebenkomponenten erreicht bei einem Durchsatz von 0,75 Mol/h abzuspaltender Methylgruppen(ca. 170g/h) mit dem 1,6fachen Chlorwasserstoffüberschuss bei 220°C Reaktormanteltemperatur und 5,5 bar Überdruck einen Disilanumsatz von 77% zu Dimethyltetrachlordisilan und Trimethyltrichlordisilan.

### Beispiel 3:

Eine disilanhaltige Fraktion mit 55 % einer Mischung aus Tetramethyldichlordisilan, Pentamethylchlordisilan und Hexamethyldisilan sowie mit 45 % Nebenkomponenten erreicht bei einem Durchsatz von 0,66 Mol/h abzuspaltender Methylgruppen(ca. 150g/h) mit dem 2fachen Chlorwasserstoffüberschuss bei 220°C Reaktormanteltemperatur und 5,5 bar Überdruck einen Disilanumsatz von 87% zu Dimethyltetrachlordisilan und Trimethyltrichlordisilan.

## Patentansprüche

1. Verfahren zur Herstellung von Disilanen der allgemeinen Formel (1)
RₐSi₂Cl₆₋ₐ (1),
bei dem Gemische enthaltend die Disilane der allgemeinen Formel (2)
R_{b}Si₂Cl_{6-b} (2),
wobei
**R** einen Alkylrest mit 1 bis 6 Kohlenstoffatomen,
**a** die Werte 1, 2 oder 3
**b** die Werte 4, 5 oder 6
bedeuten,
mit Chlorwasserstoff in Gegenwart eines Aluminiumoxidkatalysators umgesetzt werden, der auf 100 Gewichtsteile Aluminiumoxid 1 bis 10 Gewichtsteile Aluminiumchlorid und 0 bis 10 Gewichtsteile eines Metalloxids enthält, das ausgewählt wird aus Magnesiumoxid, Kupferoxid, Zinkoxid und deren Gemischen.

2. Verfahren nach Anspruch 1, bei dem der Rest R ein Methyl-oder Ethylrest ist.

3. Verfahren nach Anspruch 1 oder 2, bei dem der Aluminiumoxidkatalysator ein Porenvolumen von mindestens 0,2 cm³/g aufweist.

4. Verfahren nach Anspruch 1 bis 3, bei dem der Aluminiumoxidkatalysator eine BET-Oberfläche von mindestens 100 m²/g besitzt.

5. Verfahren nach Anspruch 1 bis 5, bei dem die Temperatur 180°C bis 280°C beträgt.

## Claims

1. Process for producing disilanes of general formula (1)
RₐSi₂Cl₆₋ₐ (1),
which comprises reacting mixtures comprising the disilanes of general formula (2)
R_{b}Si₂Cl_{6-b} (2),
where
R represents an alkyl radical of 1 to 6 carbon atoms,
a represents the values 1, 2 or 3,
b represents the values 4, 5 or 6, with hydrogen chloride in the presence of an alumina catalyst which, per 100 parts by weight of alumina, contains from 1 to 10 parts by weight of aluminum chloride and from 0 to 10 parts by weight of a metal oxide selected from magnesium oxide, copper oxide, zinc oxide and mixtures thereof.

2. Process according to Claim 1 wherein the radical R is a methyl or ethyl radical.

3. Process according to Claim 1 or 2 wherein the alumina catalyst has a pore volume of at least 0.2 cm³/g.

4. Process according to Claim 1 or 2 or 3 wherein the alumina catalyst has a BET surface area of at least 100 m²/g.

5. Process according to Claim 1 or 2 or 3 or 4 or 5 wherein the temperature is in the range from 180°C to 280°C.

## Revendications

1. Procédé pour la préparation de disilanes de formule générale (1)
RₐSi₂Cl₆₋ₐ (1)
dans lequel des mélanges contenant les disilanes de formule générale (2)
R_{b}Si₂Cl_{6-b} (2)
dans lesquelles
R représente un radical alkyle comprenant 1 à 6 atomes de carbone,
a vaut 1, 2 ou 3
b vaut 4, 5 ou 6
sont transformés avec du chlorure d'hydrogène en présence d'un catalyseur d'oxyde d'aluminium qui contient, pour 100 parties en poids d'oxyde d'aluminium, 1 à 10 parties en poids de chlorure d'aluminium et 0 à 10 parties en poids d'un oxyde de métal qui est choisi parmi l'oxyde magnésium, l'oxyde de cuivre, l'oxyde de zinc et leurs mélanges.

2. Procédé selon la revendication 1, dans lequel le radical R est un radical méthyle ou éthyle.

3. Procédé selon la revendication 1 ou 2, dans lequel le catalyseur d'oxyde d'aluminium présente un volume de pores d'au moins 0,2 cm³/g.

4. Procédé selon la revendication 1 à 3, dans lequel le catalyseur d'oxyde d'aluminium présente une surface BET d'au moins 100 m²/g.

5. Procédé selon la revendication 1 à 5, dans lequel la température est de 180°C à 280°C.
